# EUROPÄISCHE PATENTANMELDUNG

(11) **EP 2 017 109 A1**
(43) Veröffentlichungstag der Anmeldung: **21.01.2009**
(21) Anmeldenummer: 07013469.7
(22) Anmeldetag: 10.07.2007
(51) Int. Cl.: B60J 7/043

(54) **Fahrzeugspoilerdach**

(71) Anmelder: ArvinMeritor GmbH, 63128 Dietzenbach (DE)
(72) Erfinder: Becher, Thomas, 63110 Rodgau (DE); Böhm, Horst, 60599 Frankfurt (DE); Grimm, Rainer, 60598 Frankfurt (DE); Röder, Joachim, 63165 Mühlheim (DE)
(74) Vertreter: Prinz & Partner

(57) **Zusammenfassung**

Ein Fahrzeugspoilerdach weist einen Deckel (14) auf, der eine Dachöffnung (58) wahlweise freilegen und schließen kann. Eine Führungsschiene (32) ist mittig am Deckel (14) befestigt, wogegen der entsprechende Führungsschlitten (36) dachfest angebracht ist. Beim Verfahren des Deckels (14) wird folglich die Führungsschiene (32) mitverfahren, so daß die Dachöffnung (58) ungeteilt ist.

## Beschreibung

Die Erfindung betrifft ein Fahrzeugspoilerdach, mit einem eine Öffnung in einer feststehenden Dachhaut wahlweise verschließenden Deckel, der in der Deckelmitte über eine Führungsschiene gehalten und motorisch verfahren wird.

Ein solches Fahrzeugspoilerdach ist aus der EP 1 564 051 A2 bekannt. Spoilerdächer allgemein sind Dächer, bei denen der verfahrbare Deckel nicht unter die feststehende Dachhaut geschoben wird, wie dies bei sog. Schiebe-Hebe-Dächern erfolgt, sondern bei denen der Deckel über die feststehende Dachhaut nach hinten ausgestellt und verfahren wird. Es gibt zum Ausstellen und zum Führen der Deckel mehrere bislang verfolgte Ansätze. Ein Ansatz besteht darin, daß am Deckel an den vorderen und hinteren Seitenränderabschnitten Führungen und Antriebseinheiten zum Ausstellen und Verfahren vorgesehen sind. Gerade die Motoren bauen aber relativ groß, so daß der Innenraum im Bereich der längs verlaufenden Dachholme eingeschränkt wird. Um dies zu vermeiden, sieht eine andere Variante, die in der EP 1 564 051 A2 vorgesellt ist, vor, einen Mittelholm mit Führung und Antrieb einzubauen. Dieser Mittelholm teilt die Dachöffnung in zwei Hälften, die dem Fahrer bzw. dem Beifahrer zugeordnet sind. Der Mittelholm bleibt normalerweise fahrzeugfest, so daß er die Dachöffnung einschränkt. In der EP 1 564 051 A2 wurde vorgeschlagen, diesen Mittelholm auch noch herausnehmbar zu gestalten. Am Mittelholm wird der Deckel hier an seinem vorderen Rand geführt.

Aufgabe der Erfindung ist es, ein Fahrzeugspoilerdach zu schaffen, welches sowohl den Innenraum nicht unnötig einschränkt als auch eine maximale Sicht nach oben bei geöffnetem Dach erlaubt.

Die obige Aufgabe wird durch ein Fahrzeugspoilerdach nach Anspruch 1 gelöst. Dabei ist die Führungsschiene deckelmittig und deckelfest sowie der eine die Führungsschiene haltende Führungsschlitten am Dach im Bereich des hinteren Randes des Deckels angebracht.

Im Gegensatz zum Stand der Technik hat das erfindungsgemäße Fahrzeugspoilerdach keinen Mittelholm, denn die Führungsschiene selbst bildet sozusagen diesen Mittelholm. Da die Führungsschiene aber am Deckel angebracht und am hinteren Deckelrand geführt ist, verfährt sie mit diesem nach hinten. Das führt dazu, daß bei zurückgefahrenem Deckel die Öffnung ungeteilt ist, denn die Führungsschiene steht nicht mehr in die Dachöffnung. Der Antrieb erfolgt ebenfalls zentral. Dies führt zu einer erhöhten Kopffreiheit, gerade bei Sportautos oder Coupes. Die Führungsschiene läßt sich mit einem motorischen Verfahrantrieb koppeln, was bauraumsparend wirkt.

Der Deckel kann z.B. mittels Reibschluß angetrieben werden.

Gemäß der bevorzugten Ausführungsform ist längs der Schiene eine Zahnstange am Deckel vorgesehen, wobei die Zahnstange als separates Teil ausgeführt oder Teil der Führungsschiene selbst sein kann. Die letztere Variante spart natürlich Bauraum und Teile.

Zum Ausstellen des Deckels kann ein separater Ausstellantrieb vorgesehen sein. Dieser separate Ausstellantrieb spart komplizierte Kulissen- oder Hebelmimiken.

Der Ausstellantrieb sollte möglichst nahe an der Führungsschiene sitzen und mit der Dachhaut gekoppelt sein. Er sitzt also vorzugsweise im Bereich der Fahrzeugmitte, zwischen und hinter den Insassen unter der festen Dachhaut oder unter dem hinteren Deckelrandbereich.

Natürlich könnte die Ausstellbewegung auch manuell erfolgen.

Ein Verfahrantrieb zum Verfahren des Deckels über den am hinteren Deckelrand anschließenden Teil der Dachhaut ist gemäß der bevorzugten Ausführungsform vorgesehen und mit der Dachhaut gekoppelt.

Dieser Verfahrantrieb sollte ebenfalls möglichst nahe an der Führungsschiene sitzen, um Zwischenbauteile zu vermeiden, und mit der Dachhaut gekoppelt sein, was eine Bewegung zur Dachhaut mit einschließen kann.

Der Verfahrantrieb ist gemäß der bevorzugten Ausführungsform ein separater Antrieb, der auch separat vom Ausstellantrieb ausgeführt ist. Hierdurch sollen ebenfalls Hebel und Kulissen vermieden werden.

Der Verfahrantrieb kann durch den Ausstellantrieb mit angehoben und abgesenkt werden, damit dieser möglichst unmittelbar an der Führungsschiene angreift und der gesamte Verfahrantriebsmechanismus klein bauen kann.

Der Verfahrantrieb läßt sich dabei an wenigstens einem Schwenkarm anbringen und mit diesem beim Ausstellen des Deckels vertikal verfahren, genauer gesagt verschwenken. Dieser Schwenkarm ist ein einfaches, robustes Bauteil.

Zur optimalen Deckelführung sind im Bereich der vorderen Ecken des Deckels Kulissenführungen an den Dachholmen vorgesehen, über die der Deckel am Vorderrand geführt ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Draufsicht auf ein erfindungsgemäßes Spoilerdach,
- Figur 2 eine schematische Längsschnittansicht durch das Spoilerdach nach Figur 1 bei geschlossenem Dach,
- Figur 3 eine Längsschnittansicht gemäß Figur 2 bei ausgestelltem Deckel, und
- Figur 4 eine Längsschnittansicht gemäß Figur 2 bei vollständig geöffnetem Dach.

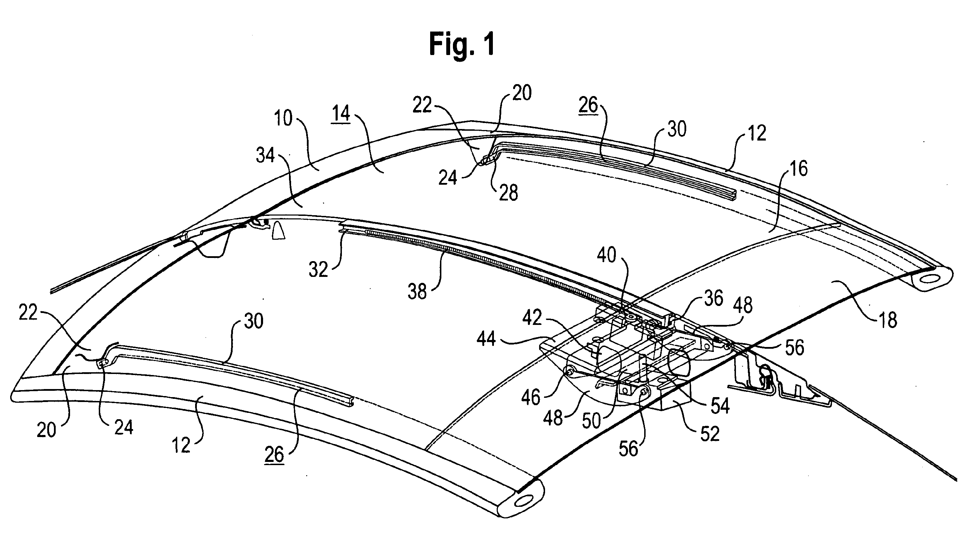

In Figur 1 ist ein Fahrzeugspoilerdach dargestellt, wobei das Dach hier nur abschnittsweise wiedergegeben ist. An die Windschutzscheibe (nicht gezeigt) schließt sich ein quer verlaufender Dachholm an, der nach oben durch einen sog. Windlauf 10 gebildet ist. Dieser Windlauf 10 ist Teil einer festen Dachhaut. Seitlich grenzt der Windlauf 10 an die seitlichen Dachholme 12 an, die bis zur Heckscheibe und seitlich an dieser entlang bis zum Fahrzeugheckbereich verlaufen. An den Windlauf 10 schließt sich entgegen der Fahrtrichtung ein ausstellbarer und verschieblicher Deckel 14 an, der vorzugsweise aus Glas oder durchsichtigem Kunststoff besteht. An den hinteren Rand 16 des Deckels 14 schließt ein rückseitiger Abschnitt der Dachhaut 18 an. Dieser Abschnitt verläuft bis zur Heckscheibe und kann aus mehreren Teilen, zum Teil auch aus durchsichtigen Abschnitten, bestehen.

Der Deckel 14 ist, wie Figur 1 zu entnehmen ist, sowohl quer zur Fahrzeugrichtung als auch in Fahrzeugrichtung gesehen gewölbt ausgeführt. Im Bereich der vorderen Ecken 20 des Deckels 14 sind an seiner Unterseite nach unten weisende Haltearme 22 mit seitlich abstehenden Gleitelementen 24 angebracht, die in Kulissenführungen 26 eingreifen. Die Kulissenführungen 26 sind innenseitig an den Dachholmen 12 befestigt. Die Dachholme 12 erstrecken sich, wie in Figur 1 zu erkennen ist, teilweise bis unter den Deckel 14.

Die Kulissenführungen 26 haben einen vorderen, steil ansteigenden Abschnitt 28 und einen sich anschließend parallel zum Dachholm 12 verlaufenden Abschnitt 30.

Auf der Unterseite des Deckels 14 ist, in Fahrzeugrichtung gesehen in der Mitte, eine Führungsschiene 32 angebracht. Die Führungsschiene 32 erstreckt sich fast bis zum vorderen Rand 34 des Deckels. Angebracht wird die Führungsschiene 32 am Deckel 14 beispielsweise durch Kleben oder durch Einbetten in eine Hinterschäumung. Darüber hinaus könnte der Deckel 14 auch selbst komplett geschäumt sein, so daß die Führungsschiene 32 dann in das flüssige Kunststoffmaterial beim Schäumen des Deckels 14 eingebettet wird.

Die Führungsschiene 32 läuft in einem Führungsschlitten 36, welcher mit der Unterseite der festen Dachhaut 18 nahe des hinteren Randes 16 gekoppelt ist. Die Form der Führungsschiene 32 ist im wesentlichen doppel-T-förmig, und der Führungsschlitten 36 hat im Querschnitt eine U-Form mit nach innen eingewinkelten freien Schenkelenden, um in die seitlichen Nuten der Führungsschiene 32 einzugreifen und diese formschlüssig zu halten.

Eine seitliche Nut der Führungsschiene 32 ist mit einer Verzahnung 38 versehen, so daß eine Art Zahnstange entsteht. Diese Verzahnung 38 kann einstückig mit der Führungsschiene 32 ausgeführt sein oder als separates, an der Führungsschiene 32 befestigtes Teil. Der Schlitten 36 hat eine Ausnehmung, in der ein Zahnrad 40 angeordnet ist, das eine im wesentlichen vertikale Achse besitzt. Dieses Zahnrad 40 wird von einem separaten elektrischen Verfahrantrieb 42 bewegt, der unterhalb der Dachhaut 18 nahe des hinteren Randes 16 im Bereich der Fahrzeugmitte und unmittelbar an die Führungsschiene 32 angrenzend angeordnet ist. Der Verfahrantrieb 42 ist auf der Unterseite einer Konsole 44 befestigt, an der auch der Führungsschlitten 36 angebracht ist. Die Konsole 44 ist über Schwenklager 46 an zwei Schwenkarmen 48 angebracht, wobei ein Schwenkarm 48 an einer Seite der Konsole 44 und der andere Schwenkarm 48 an der entgesetzten Seite der Konsole 44 liegt. Die Schwenkarme 48 bilden einarmige Hebel und sind über einen mittigen Steg 50 fest miteinander verbunden. Ein mit einem Elektromotor versehener Ausstellantrieb 52 ist ebenfalls im Bereich der Fahrzeugmitte dachfest angebracht. Auch der Ausstellantrieb 52 ist möglichst nahe an der Führungsschiene 32 positioniert. Er liegt unterhalb des Stegs 50 und treibt eine vertikale Spindel 54 an, die in ein Gewinde im Steg 50 eingreift, um einen Spindelantrieb zu bilden.

In Figur 1 sind ferner auch die dachfesten, hinteren Lager 56 für die Schwenkarme 48 zu sehen.

Die beiden Antriebe 42 und 52 sind jeweils am Dach angebracht bzw. dachfest, wogegen die Führungsschiene 32 deckelfest ist.

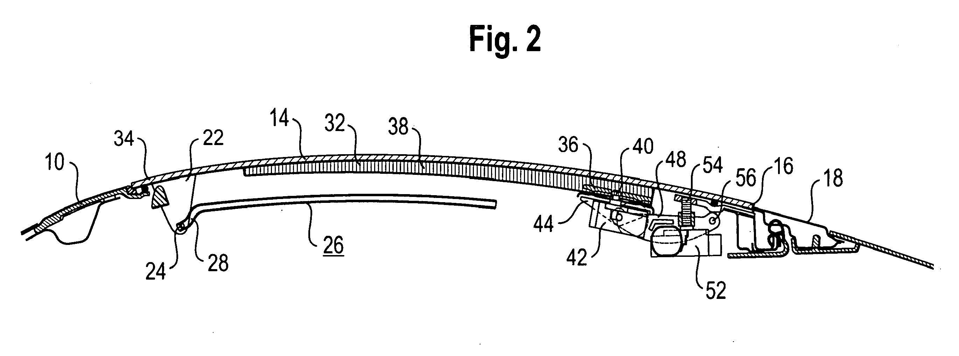

Im folgenden wird die Funktionsweise des Spoilerdachs anhand der Figuren 2 bis 4 erläutert.

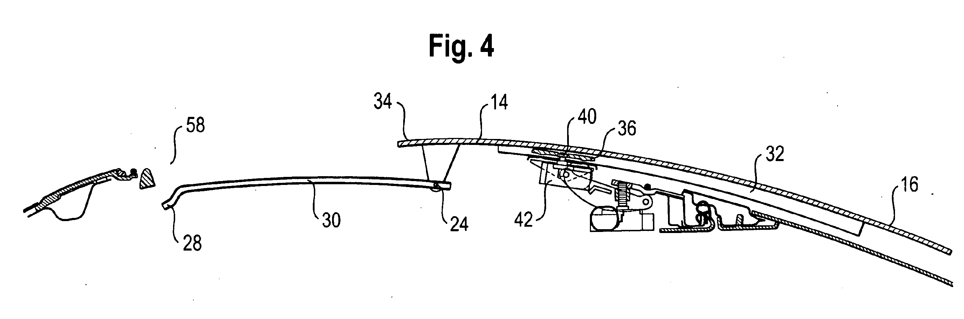

In Figur 2 ist das Spoilerdach geschlossen, d.h. die Öffnung 58 (siehe Figur 4) in der Dachhaut 18 ist durch den Deckel 14 geschlossen. Das Gleitelement 24 liegt am vorderen, unteren Ende des Abschnitts 28 der Kulissenführung 26.

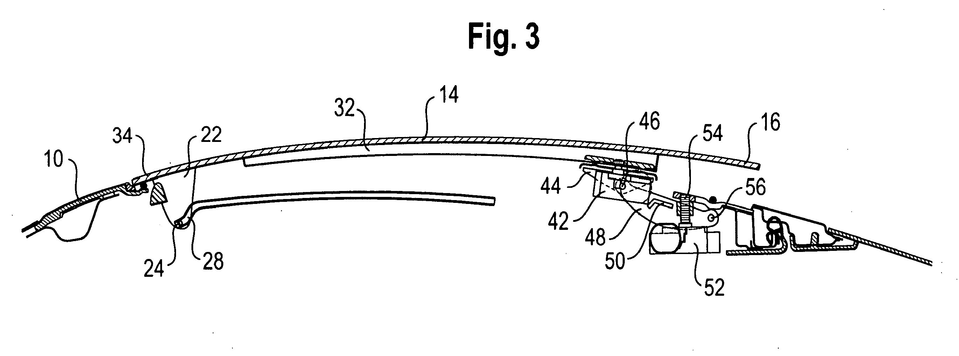

Zum Ausstellen des Deckels 14 wird der hintere Rand 16 angehoben, so daß eine sog. Lüfterstellung erreicht wird. Hierzu wird der Ausstellantrieb 52 betätigt, so daß sich die Spindel 54 dreht und die Einheit aus Schwenkarmen 48 und Steg 50 um die Lager 56 nach oben schwenken (siehe Figur 3). Die Konsole 44 mit dem Verfahrantrieb 42 werden dabei ebenfalls mit angehoben, wobei sich die Konsole 44 durch das Schwenklager 46 der neuen Ausrichtung des Deckels 14 anpassen kann.

Soll das Dach vollständig geöffnet und die Öffnung 58 freigelegt werden, wird der Verfahrantrieb 42 betätigt. Das Zahnrad 40 wird angetrieben, um die durch die Verzahnung 38 gebildete Zahnstange und damit die Führungsschiene 32 samt des Deckels 14 nach hinten zu bewegen (siehe Figur 4). Bei dieser Bewegung wird auch der vordere Rand 34 des Deckels 14 angehoben, indem das Gleitelement 24 den zuerst steil ansteigenden Abschnitt 28 nach oben durchläuft, um dann in den Abschnitt 30 zu gelangen und dabei nach hinten bewegt zu werden. In der geöffneten Position gemäß Figur 4 ist gut zu erkennen, daß kein Mittelsteg mehr vorhanden ist und die Führungsschiene 32 folglich ebensowenig wie das gesamte Antriebssystem die Dachöffnung 58 teilt oder in diese hineinragt.

Die beiden Antriebe 42, 52 sind separate Antriebe, die unabhängig voneinander betätigt werden können. Der Antrieb 42 macht die Ausstellbewegung mit und wird durch den Antrieb 52 dabei bewegt. Es ergibt sich eine insgesamt kompakte Antriebsbaugruppe, die in Figur 1 zu sehen ist und die entweder unmittelbar unterhalb der Dachhaut 18 im Bereich des hinteren Randes 16 liegt oder, wie in den Figuren 2 bis 4 zu erkennen ist, unter dem hinteren Rand 16 bei geschlossenem Dach positioniert ist.

Es ergibt sich eine sehr große, freie Dachöffnung 58, wobei die Kopffreiheit durch die Antriebsbaugruppe selbst nicht eingeschränkt wird. Insbesondere bei zweisitzigen Fahrzeugen erhöht sich dabei die Kopffreiheit.

### Bezugszeichenliste

- 10: Windlauf
- 12: Dachholm
- 14: Deckel
- 16: Rand
- 18: Dachhaut
- 20: Ecke
- 22: Haltearm
- 24: Gleitelement
- 26: Kulissenführung
- 28: Abschnitt
- 30: Abschnitt
- 32: Führungsschiene
- 34: Rand
- 36: Führungsschlitten
- 38: Verzahnung
- 40: Zahnrad
- 42: Verfahrantrieb
- 44: Konsole
- 46: Schwenklager
- 48: Schwenkarm
- 50: Steg
- 52: Ausstellantrieb
- 54: Spindel
- 56: Lager
- 58: Dachöffnung

## Patentansprüche

1. Fahrzeugspoilerdach, mit
einem eine Öffnung (58) in einer fest stehenden Dachhaut (18) wahlweise verschließenden Deckel (14), der in der Deckelmitte im Bereich seines hinteren Randes (16) über eine Führungsschiene (32) gehalten und motorisch verfahren wird, wobei
die Führungsschiene (32) deckelfest und einer die Führungsschiene (32) haltender Führungsschlitten (36) am Dach angebracht ist.

2. Fahrzeugspoilerdach nach Anspruch 1, **dadurch gekennzeichnet, daß** die Führungsschiene mit einem Verfahrantrieb (42) gekoppelt ist.

3. Fahrzeugspoilerdach nach Anspruch 1 oder 2, **dadurch gekennzeichnet, daß** längs der Führungsschiene (32) eine Zahnstange am Deckel (14) vorgesehen ist.

4. Fahrzeugspoilerdach nach Anspruch 3, **dadurch gekennzeichnet, daß** die Zahnstange Teil der Führungsschiene (32) ist.

5. Fahrzeugspoilerdach nach einem der vorhergehenden Ansprüche, **dadurch gekennzeichnet, daß** eine Ausstellmechanik zum Ausstellen des hinteren Randes (16) des Deckels (14) vorgesehen ist.

6. Fahrzeugspoilerdach nach einem der vorhergehenden Ansprüche, **dadurch gekennzeichnet, daß** ein separater Ausstellantrieb (52) zum Ausstellen des hinteren Randes (16) des Deckels (14) vorgesehen ist.

7. Fahrzeugspoilerdach nach Anspruch 6, **dadurch gekennzeichnet, daß** der Ausstellantrieb dachfest angebracht ist.

8. Fahrzeugspoilerdach nach Anspruch 6 oder 7, **dadurch gekennzeichnet, daß** der Ausstellantrieb (52) nahe der Führungsschiene (32) sitzt und mit der Dachhaut gekoppelt ist.

9. Fahrzeugspoilerdach nach einem der vorhergehenden Ansprüche, **dadurch gekennzeichnet, daß** ein Verfahrantrieb (42) zum Verfahren des Deckels (14) über den an den hinteren Rand (16) des Deckels (14) anschließenden Teil der Dachhaut (18) vorgesehen ist.

10. Fahrzeugspoilerdach nach Anspruch 9, **dadurch gekennzeichnet, daß** der Verfahrantrieb (42) am Dach angebracht ist.

11. Fahrzeugspoilerdach nach Anspruch 9 oder 10, **dadurch gekennzeichnet, daß** der Verfahrantrieb (42) nahe der Führungsschiene (32) vorgesehen ist.

12. Fahrzeugspoilerdach nach einem der Ansprüche 9 bis 11, **dadurch gekennzeichnet, daß** der Verfahrantrieb (42) ein separater Antrieb ist.

13. Fahrzeugspoilerdach nach einem der Ansprüche 6 bis 8 und zusätzlich nach einem der Ansprüche 9 bis 12, **dadurch gekennzeichnet, daß** der Verfahrantrieb (42) durch den Ausstellantrieb (52) mit angehoben und abgesenkt wird.

14. Fahrzeugspoilerdach nach einem der Ansprüche 9 bis 13, **dadurch gekennzeichnet, daß** der Verfahrantrieb (42) auf wenigstens einem Schwenkarm (48) angebracht und mit diesem beim Ausstellen des Deckels (14) angehoben wird.
